(19) Europäisches Patentamt

European Patent Office

Office européen des brevets

(11) **EP 0 692 463 B1**

(12) **FASCICULE DE BREVET EUROPEEN**

(45) Date de publication et mention
de la délivrance du brevet:
**14.04.1999 Bulletin 1999/15**

(51) Int. Cl.⁶: **C03C 17/42**

(21) Numéro de dépôt: **95401671.3**

(22) Date de dépôt: **12.07.1995**

(54) **Vitrage hydrophobe multicouches**

Hydrophobische Mehrschichtverglasung

Hydrophobic multilayer glazing

(84) Etats contractants désignés:
**BE DE ES FR GB IT SE**

(30) Priorité: **13.07.1994 FR 9408734**

(43) Date de publication de la demande:
**17.01.1996 Bulletin 1996/03**

(73) Titulaire: **SAINT-GOBAIN VITRAGE
92400 Courbevoie (FR)**

(72) Inventeurs:
• **Chartier, Pascal
F-91400 Orsay (FR)**
• **Azzopardi, Marie-José
F-75009 Paris (FR)**
• **Codazzi, Nathalie
F-95120 Ermont (FR)**
• **Chaussade, Pierre
F-45600 Sully sur Soire (FR)**
• **Naoumenko, Yves
F-45460 Bray en Val (FR)**
• **Gauthier, Fabienne
F-45600 Sully sur Loire (FR)**
• **Guiselin, Olivier
F-75016 Paris (FR)**

(74) Mandataire:
**Le Vaguerèse, Sylvain Jacques et al
SAINT-GOBAIN RECHERCHE
39, quai Lucien Lefranc
93300 Aubervilliers Cédex (FR)**

(56) Documents cités:
**EP-A- 0 166 363          EP-A- 0 545 201
US-A- 5 368 892**

• **DATABASE WPI Section Ch, Week 9320 Derwent
Publications Ltd., London, GB; Class L01, AN
93-164191 & JP-A-05 097 477 (NIPPON SHEET
GLASS CO LTD) , 20 Avril 1993**
• **DATABASE WPI Section Ch, Week 9247 Derwent
Publications Ltd., London, GB; Class A26, AN
92-386219 & JP-A-04 285 038 (TOKAI RIKA
DENKI KK) , 9 Octobre 1992**
• **DATABASE WPI Section Ch, Week 9247 Derwent
Publications Ltd., London, GB; Class A26, AN
92-386216 & JP-A-04 285 035 (TOKAI RIKA
DENKI KK) , 9 Octobre 1992**
• **PATENT ABSTRACTS OF JAPAN vol. 015 no. 100
(C-0813) ,11 Mars 1991 & JP-A-02 311332
(SEKISUI CHEM CO LTD) 26 Décembre 1990,**

## Description

L'invention concerne un vitrage 《 non-mouillable 》 et son procédé de fabrication, tels que indiqués dans les revendications 1, 17 et 18 de la présente demande.

Les vitrages dont il est question dans la suite sont constitués d'un verre minéral ou organique. Ils sont utilisés, en particulier, sur les véhicules, par exemple dans le domaine aéronautique, ferroviaire ou automobile. Ils peuvent aussi être utilisés dans le domaine du bâtiment.

La 《 mouillabilité 》 désigne la tendance des liquides polaires ou non-polaires à adhérer au vitrage en formant un film gênant. Elle désigne aussi la tendance à retenir les poussières de toutes natures.

La présence d'un film liquide ou de poussières altère la vision au travers du vitrage et diminue sa transparence. Pour remédier à ces difficultés il est connu de couvrir les vitrages d'un revêtement non-mouillable.

Un revêtement connu est obtenu à partir d'un mélange constitué d'un perfluoroalkyle silane et d'un télomère oléfinique fluoré comme décrit dans la demande EP 452 723. Un autre revêtement connu est celui décrit dans la demande EP 492 545. Ce revêtement est à base d'un alkylsilane fluoré. Il est apparu que les propriétés de ces revêtements se dégradaient dans le temps. C'est en particulier le cas sur les vitrages de véhicules qui subissent les contraintes climatiques (humidité, rayonnement U.V., ...), mais aussi des contraintes mécaniques dues, par exemple, au frottement d'essuie-glaces et/ou aux chiffons de polissage ou de nettoyage.

Pour améliorer la résistance aux contraintes climatiques, les demandes EP 497 189 et EP 476 510 décrivent un revêtement dont l'interface avec le vitrage est rendu irrégulier. La demande EP 497 189 décrit plus précisément la formation d'irrégularités de l'ordre du micron obtenues, soit par un traitement de surface du substrat, soit par la présence de particules sur le substrat ou incorporées dans une sous-couche ou dans la couche non-mouillable. La demande EP 476 510 décrit l'utilisation d'une sous-couche rendue irrégulière par une attaque à base d'acide fluorhydrique ou par l'action d'un plasma.

L'obtention de ces revêtements nécessite cependant une opération supplémentaire pour la formation de ces irrégularités. Par ailleurs, il est apparu que la résistance à l'abrasion de ces revêtements n'était pas entièrement satisfaisante.

L'invention a pour but un vitrage non-mouillable présentant une résistance améliorée aux contraintes climatiques et qui offre, par ailleurs, une résistance mécanique améliorée, notamment un vitrage qui conserve ses propriétés de non-mouillabilité malgré l'abrasion qu'il subit.

L'invention a également pour but un vitrage fonctionnel non-mouillable dont la durabilité est améliorée, notamment la résistance aux contraintes climatiques.

Le vitrage selon l'invention comprend un substrat, notamment un substrat en verre, éventuellement recouvert, au moins sur une partie, d'une ou plusieurs couches fonctionnelles et muni d'un revêtement comprenant une sous-couche essentiellement minérale et une couche hydrophobe et oléophobe. La densité de la sous-couche selon l'invention est au moins égale à 80 % de la densité massique du matériau qui la constitue.

Par 《 densité massique 》, on entend la densité des formes cristallines du matériau constituant la sous-couche. La sous-couche selon l'invention présente une forte densité, de préférence supérieure à 90 % de la densité massique du matériau qui la constitue.

Les sous-couches envisagées selon l'invention sont des sous-couches essentiellement minérales, c'est-à-dire dont la proportion en éléments carbone est minoritaire. Elles sont constituées essentiellement d'un matériau choisi parmi les matériaux suivants : $Al_2O_3$, $Ga_2O_3$, $SnO_2$, $TiO_2$, $Ta_2O_5$, $Cr_2O_3$, $ZrO_2$, $Nb_2O_5$, $In_2O_3$, $Fe_2O_3$, $CoO_3$, $V_2O_5$, $Y_2O_3$, TiN, $SiO_x$ avec x compris entre 0 et 2, $SiO_pC_q$ avec p compris entre 1 et 2 et q étant 0 ou 1, seuls ou en combinaison.

Avantageusement la sous-couche selon l'invention est également très dure. Sa dureté est de préférence supérieure à celle du verre. Elle présente avantageusement une structure cristalline.

L'amélioration constatée selon l'invention est vraisemblablement à rapprocher du nombre et du type de liaisons qui s'établissent entre les sous-couches et la couche hydrophobe et oléophobe. Elles mettent en effet en jeu des configuration atomiques correspondant à des liaisons fortes de type covalent. En outre, les caractéristiques mécaniques des sous-couches confèrent une résistance à l'abrasion améliorée au revêtement de l'invention. Sans que l'invention soit liée par cette interprétation, la sous-couche est alors capable d'absorber les contraintes mécaniques qui se propagent prioritairement en son sein.

Pour obtenir ce résultat, il convient de former des sous-couches d'épaisseurs convenables. Les sous-couches utilisées selon l'invention présentent, de préférence, une épaisseur qui n'est pas inférieure à 80 Angströms. Par ailleurs, un accroissement de l'épaisseur au-delà d'une certaine limite n'apporte plus d'avantage sensible et peut dégrader les qualités de transparence du vitrage. Pour cette raison, on préfère utiliser des couches dont l'épaisseur ne dépasse pas 5000 Angströms.

Selon une variante avantageuse, la sous-couche est conductrice, susceptible par exemple d'évacuer les charges électrostatiques présentes sur une face du vitrage. Le revêtement selon l'invention allie ainsi deux fonctions, à savoir : une protection électrostatique du vitrage et une fonction non-mouillable. La sous-couche peut être à base d'un oxyde métallique conducteur. Elle peut également être dopée par un constituant pour lui conférer des propriétés conductrices satisfaisantes. Il s'agit, de préférence, d'une sous-couche à base d'oxyde d'étain dopé au fluor, dont le taux de porteurs est compris entre $10^{19}$ et $10^{21}$ par $cm^3$.

Pour former les sous-couches utilisées selon l'invention, les techniques connues pour la formation de telles couches sont généralement applicables. Il est ainsi possible d'utiliser une technique de dépôt sous vide (évaporation thermique, pulvérisation cathodique...). Il peut aussi s'agir de techniques par décomposition thermique ou ionique du type CVD (Chemical Vapour Deposition), de CVD plasma, ou encore de couches formées par pyrolyse de poudres, de solutions ou de vapeurs.

Les sous-couches formées par pyrolyse conviennent particulièrement bien à la mise en oeuvre de l'invention compte tenu du fait que ces couches sont fortement adhérentes au substrat, présentent une grande compacité et sont cristallines.

La sous-couche selon l'invention peut être située sur le substrat en verre ou sur tout type de couche, par exemple une couche mince pouvant faire partie éventuellement d'un empilement de couches.

Selon l'invention, on utilise avantageusement pour couche non-mouillable une couche constituée essentiellement d'alkylsilanes fluorés hydrolysables. Il s'agit, de préférence, de couches de type monomoléculaire obtenues à partir d'au moins un alkylsilane fluoré dont la chaîne carbonée, éventuellement ramifiée, comporte au moins six atomes de carbone, le carbone de la ou des extrémités étant entièrement substitué par du fluor. La couche peut également être obtenue à partir d'alkylsilanes fluorés ou d'un mélange d'alkylsilanes fluorés et, éventuellement, d'un mélange d'alkylsilanes fluorés et de silanes du type $SiX_4$ dans lequel X est une fonction hydrolysable.

L'alkylsilane fluoré est de préférence un perfluoroalkylsilane de forme générale :

$$CF_3\text{-}(CF_2)_n\text{-}(CH_2)_m\text{-}SiX_3$$

dans laquelle :

- n est 0 à 12
- m est 2 à 5
- X est un groupement hydrolysable, par exemple un groupement chloré ou alkoxy.

De préférence le perfluoroalkylsilane est choisi parmi le groupe :
$CF_3\text{-}(CF_2)_5\text{-}(CH_2)_2\text{-}SiCl_3$, $CF_3\text{-}(CF_2)_7\text{-}(CH_2)_2\text{-}SiCl_3$, $CF_3\text{-}(CF_2)_9\text{-}(CH_2)_2\text{-}SiCl_3$

Les organosilanes du type indiqué ci-dessus présentent la particularité de se fixer sur la sous-couche par l'intermédiaire de sites réactifs superficiels de la sous-couche.

En choisissant les conditions de mise en oeuvre convenablement, il se forme des couches dites monomoléculaires bidimensionnelles d'une épaisseur comprise entre 10 et 50 Angströms. La structure générale de ces couches est, pour chaque organosilane, une liaison covalente au point de fixation sur la sous-couche et deux liaisons covalentes avec des molécules d'organosilane voisines par les deux autres fonctions hydrolysables. La couche ainsi formée est une monocouche à motifs polysiloxanes dans laquelle les organosilanes ont été greffés régulièrement.

La couche monomoléculaire présente, vers l'extérieur, les chaînes fluorocarbonées suivant un arrangement régulier, l'extrémité des chaînes constituant la face externe du vitrage revêtu. Selon l'invention, au moins les extrémités des chaînes sont fluorées ce qui leur confère, non seulement un caractère hydrophobe particulièrement marqué, mais aussi une grande résistance au vieillissement lorsque le vitrage est soumis au rayonnement U.V.

On obtient selon l'invention un revêtement dont la durabilité, en termes de résistance mécanique et chimique, est améliorée. L'angle de contact d'une goutte d'eau avec le revêtement de l'invention est supérieur à 60° et, avantageusement, supérieur à 75° après que le revêtement ait subi une abrasion de 500 tours de meule selon la norme ASTM D 1044-78 ou après que le revêtement ait été maintenu 4 heures dans l'eau bouillante déminéralisée.

L'invention concerne également le procédé d'obtention d'un tel revêtement.

Le procédé comprend notamment les étapes suivantes :

- dépôt d'une couche hydrophobe sur un substrat muni d'une sous-couche dense et essentiellement minérale, après un éventuel nettoyage de ladite sous-couche, par mise en contact du substrat muni de la sous-couche avec une solution contenant au moins un alkylsilane fluoré dans un solvant non-polaire. Il peut s'agir d'une solution à base d'un alkylsilane fluoré ou d'un mélange d'alkylsilanes fluorés et, éventuellement, d'autres silanes.

Les nettoyages et notamment celui de la sous-couche sont des étapes importantes car elles déterminent le nombre de sites réactifs susceptibles d'établir une liaison entre le substrat et la sous-couche et entre la sous-couche et la couche. Il va de soi que, plus le nombre de sites est grand, plus le revêtement est fixé solidement au substrat et notamment la couche solidement fixée au substrat. Le nettoyage permet l'élimination des contaminations absorbées s'opposant à une bonne fixation. Il est à noter qu'une sous-couche déposée sous vide ne nécessite pas de nettoyage car on peut considéer qu'elle est propre à sa sortie de la cloche sous vide.

Un procédé d'obtention du vitrage selon l'invention comprend les étapes suivantes :

- éventuel nettoyage de la surface du substrat à enduire,
- dépôt d'une sous-couche essentiellement minérale, la densité de la sous-couche étant au moins égale à 80 % de la densité massique du matériau qui la constitue,
- éventuel nettoyage de la sous-couche à revêtir,
- dépôt d'une couche hydrophobe et oléophobe sur ladite sous-couche nettoyée.

Le dépôt de la sous-couche est obtenu par décomposition de molécules et, avantageusement, par pyrolyse.

Le dépôt de la couche non mouillable s'effectue par mise en contact du substrat revêtu de la sous-couche avec une solution à base d'alkylsilane fluoré ou d'un mélange d'alkylsilanes fluorés et, éventuellement, d'autres silanes dans un système solvant non-polaire. Le temps de réaction est compris entre 5 et 30 minutes et, de préférence, de l'ordre de 10 minutes.

La solution comprend un alkylsilane de type décrit ci-dessus, dont la concentration varie de $2.10^{-3}$ à $5.10^{-2}$ mol/l dans un système solvant non-polaire. Le choix du solvant n'est pas indifférent et influe sur le taux d'alkylsilanes greffés sur le substrat. Le système de solvant est constitué d'au moins 80 % en volume de solvant non polaire et de 20 % de solvant(s) chloré(s). Le solvant non-polaire comporte, de préférence, une chaîne carbonée dont la longueur est du même ordre de grandeur que celle de l'organosilane utilisé. En autres termes, le nombre de carbones du solvant est globalement identique, à deux ou trois carbones près, au nombre de carbones présents dans la chaîne carbonée de l'organosilane. Le solvant non-polaire est, de préférence, choisi parmi le n-héxadécane ou l'iso-octane, le solvant chloré est, de préférence, choisi dans le groupe comprenant le dichlorométhane, le trichlorométhane, le trichloroéthane, le trichloroéthylène, le trichlorotrifluoroéthane et le tétrachlorure de carbone. Un système particulièrement préféré pour la mise en oeuvre de l'invention est composé d'un solvant non-polaire.

Une fois traité, le support est prêt à être utilisé sans qu'un traitement thermique ultérieur ne soit nécessaire.

Selon une variante de l'invention, la couche hydrophobe et oléophobe est déposée sur au moins une partie d'une sous-couche essentiellement minérale dont la densité est égale à au moins 80 % de la densité du matériau qui la constitue, cette sous-couche faisant partie d'un empilement fonctionnel ou étant elle-même une couche fonctionnelle.

Selon une variante préférée, la sous-couche est constituée essentiellement d'oxyde de silicium et, en particulier, de dioxyde de silicium.

On comprend par couche fonctionnelle ou empilement fonctionnel, une couche ou un empilement conférant des propriétés particulières au vitrage, notamment des propriétés thermiques, optiques ou électriques.

Comme empilement fonctionnel on peut citer, par exemple, un empilement antireflet, un empilement bas émissif et/ou conducteur ou tout autre type d'empilement.

Le vitrage selon l'invention présente, outre les propriétés conférées par l'empilement fonctionnel, des propriétés hydrophobes et oléophobes. En outre, la résistance aux conditions climatiques de l'empilement fonctionnel, en particulier de la couche à base d'oxyde de silicium, est améliorée par la présence de la couche hydrophobe et oléophobe. Cette amélioration est notamment sensible pour les couches fonctionnelles déposées, par exemple, sous vide et utilisées en tant que couches extérieures, c'est-à-dire les couches soumises aux conditions climatiques.

Selon une variante préférée de l'invention, le vitrage comprend un substrat en verre, un empilement antireflet dont la dernière couche, c'est-à-dire la plus éloignée du substrat est une couche dense constituée essentiellement d'oxyde de silicium et une couche hydrophobe et oléophobe constituée essentiellement d'alkylsilanes fluorés hydrolysables telle que décrite ci-dessus. L'empilement antireflet est constitué d'une alternance de couches minces à haut et bas indices de réfraction en un matériau diélectrique, la dernière couche étant une couche bas indice en oxyde de silicium. Les couches dites bas indice ont, de préférence, un indice de réfraction compris entre 1,38 et 1,65. Les couches dites à haut indice ont un indice de réfraction supérieur à 1,85 et, de préférence, compris entre 2 et 2,45.

Un empilement préféré de l'invention est celui décrit dans la demande de brevet WO 92/04185, incorporé par référence dans la demande, dans lequel la couche à haut indice est une couche à base d'oxyde de niobium et la couche bas indice est une couche à base d'oxyde de silicium. Ces couches sont déposées, par exemple, par des techniques sous vide connues, du type pulvérisation cathodique réactive. Eventuellement, une couche intermédiaire peut être prévue entre l'empilement et le substrat, par exemple une couche écran à la diffusion des alcalins telle que décrite dans la demande non publiée FR 95/02102, incorporée par référence dans la présente demande.

Un tel empilement a pour fonction de diminuer la réflexion lumineuse du vitrage donc d'en augmenter sa transmission lumineuse. Un substrat ainsi revêtu voit donc s'accroître son ratio lumière transmise/lumière réfléchie, ce qui améliore la visibilité des objets placés derrière lui.

4

Selon une autre variante de l'invention, l'empilement fonctionnel est un empilement bas émissif et/ou conducteur. Un tel empilement comprend au moins une couche conductrice et/ou basse émissive à base d'oxyde métallique, notamment un oxyde métallique dopé, par exemple d'oxyde d'indium dopé à l'étain (ITO) ou l'oxyde d'étain dopé au fluor ($SnO_2$:F). Un tel empilement est, par exemple, décrit dans les demandes de brevets EP 544 577 et EP 500 445.

Selon une variante préférée de l'invention, l'empilement est celui décrit dans la demande FR 2 704 545, incorporée par référence dans la présente demande.

Il comprend outre la couche conductrice et/ou basse émissive à base d'oxyde(s) métallique(s), un revêtement interne d'épaisseur géométrique variable comprise entre 90 nm et 135 nm et d'indice de réfraction compris entre 1,65 et 1,90. Cette couche interne est située entre le substrat et la couche conductrice et/ou basse émissive. Cette dernière est revêtue d'une couche ⟨⟨ externe ⟩⟩ d'épaisseur géométrique comprise entre 80 et 110 nm et d'indice de réfraction compris entre 1,40 et 1,65 et qui est constituée essentiellement d'oxyde de silicium. Le revêtement interne est, quant à lui, constitué de préférence d'un oxycarbure et/ou oxynitrure de silicium.

Un tel empilement, dans le domaine du bâtiment, a pour fonction d'accroître le taux de réflexion du vitrage, côté intérieur de la pièce, dans l'infrarouge lointain, rayonnement émis par la pièce. Cela permet d'améliorer le confort des habitants, notamment en hiver, en réduisant les pertes énergétiques dues, pour une part, à une fuite de ce rayonnement vers l'extérieur à travers le vitrage. On peut aussi utiliser ce produit pour ses propriétés de faible résistivité, par exemple pour former des vitrages chauffants en prévoyant des arrivées de courant, notamment en tant que pare-brise ou lunette arrière chauffante dans une automobile.

Bien entendu, tout autre type d'empilement fonctionnel de couches ou une couche fonctionnelle peut être envisagé(e) selon l'invention dans la mesure où la dernière couche, c'est-à-dire la plus éloignée du substrat, est une couche essentiellement minérale dont la densité est égale à au moins 80 % de celle du matériau qui la constitue.

Les vitrages préparés avec les revêtements selon l'invention sont, à la fois, fortement hydrophobes et oléophobes. Ils résistent bien au rayonnement U.V., aux agressions chimiques et à l'abrasion mécanique. Ils sont avantageusement utilisés comme vitrages anti-pluie, anti-givre, anti-salissure... ou comme vitrages fonctionnels dont la durabilité est améliorée présentant, en outre, des propriétés hydrophobes et oléophobes. Ils sont particulièrement utiles comme vitrages dans des véhicules terrestres, aéronautiques ou pour des bâtiments.

Les exemples suivants, non limitatifs, illustrent les caractéristiques et avantages de l'invention :

- l'exemple 1 compare la durabilité du revêtement de l'invention à celle d'un revêtement inapproprié,
- les exemples 2 et 3 illustrent la durabilité améliorée d'un revêtement selon l'invention.
- l'exemple 4 illustre les propriétés d'oléophobie du revêtement de l'invention,
- l'exemple 5 illustre la durabilité améliorée d'un vitrage antireflet.

La durabilité du revêtement selon l'invention est mesurée par plusieurs tests.

La résistance chimique est mesurée soit par le test à l'eau bouillante, soit par le test dit au brouillard salin.

Le test à l'eau bouillante consiste à plonger dans de l'eau déminéralisée bouillante l'échantillon testé pendant un temps donné. On mesure alors l'angle de contact d'une goutte d'eau sur l'échantillon.

Le test au brouillard salin est décrit dans la norme ISO 9227 et consiste à plonger le substrat dans un brouillard salin neutre à partir de sel de NaCl à 50 g/l, à une température de 35°C et un pH compris entre 6,5 et 7,2.

La résistance à l'abrasion est mesurée au test de Taber selon la norme ASTM D 1044-78. Les échantillons sont soumis à l'action d'une meule de type CS-10F sous une charge de 500 g. Après un nombre donné de tours, l'angle de contact d'une goutte d'eau est mesuré.

La résistance à l'abrasion est aussi mesurée en soumettant un échantillon de 30 x 30 $cm^2$ à un balayage d'essuie-glace. La force appliquée par le balai sur l'échantillon est d'environ 45 N, la cadence du balai est de 111 cycles/min, un cycle étant un mouvement d'aller et retour du balai. La dureté du balai est, quant à elle, égale à environ 70 Shore A.

La dureté est mesurée par le test ⟨⟨ Airco ⟩⟩ selon lequel on abrase la couche à tester pendant 10 tours par une meule sous une charge de 500 g en utilisant la machine de Taber ASTM 1044-78 et on compte le nombre de rayures formées avec un microscope grossissant 50 fois l'échantillon observé. La dureté est exprimée par la formule :

$$D = 10\text{-}0{,}18\,R$$

dans laquelle R est la moyenne du nombre de rayures comptées dans quatre carrés de 2,54 cm de côté.

La rugosité de la sous-couche est mesurée avec un profilomètre ⟨⟨ Talystep ⟩⟩ commercialisé par Rank Precision Industry. Une pointe de diamant affleure la surface de l'échantillon et enregistre les variations d'amplitude correspondant aux rugosités présentes. Pour les mesures faites, le rayon de courbure de la pointe est de 5 microns, la charge est de 30 mg et la vitesse est de 5 microns par seconde. L'amplitude de pic à vallée, représentative des rugosités observées, a été mesurée sur une longueur de 50 $\mu$m.

## EXEMPLE 1

Des échantillons de verre flotté silico-sodo-calcique sont minutieusement nettoyés. La densité du verre est de 2,4 g/cm$^3$.

Une première série d'échantillons est traitée au moyen d'une solution de décane contenant $4.10^{-3}$ mol/l d'un perfluorosilane de formule $CF_3$-$(CF_2)_7$-$(CH_2)_2$-$SiCl_3$. L'épaisseur de la couche obtenue, mesurée par réflectométrie des rayons X, est d'environ 15 Angströms.

Une deuxième série d'échantillons est préparée en déposant une couche de silice par Chemical Vapour Deposition Plasma (CVD Plasma). D'après le spectre infrarouge, la sous-couche de $SiO_2$ obtenue n'a pas une forte densité massique et constitue une sous-couche inappropriée selon l'invention. Cette sous-couche est nettoyée et recouverte de la même couche que la première série d'échantillons.

Dans la troisième série on utilise des verres revêtus d'une sous-couche $SiO_2$ obtenue par mise en contact du substrat dans une solution supersaturée en silice obtenue par ajout d'eau et d'un gel de silice dans de l'acide hydrofluorydrique jusqu'à ce que la concentration d'acide hydrofluorydrique soit égale à 2.5 mol/l. L'épaisseur de la sous-couche est d'environ 450 Angströms et sa densité d'environ 2,3 g/cm$^3$, c'est-à-dire égale à la densité massique de la silice (structure cristalline de type cristobalite). La sous-couche préalablement nettoyée est revêtue de la même couche hydrophobe que pour les séries précédentes.

Les angles de contact d'une goutte d'eau sont respectivement 110, 105 et 115°. Après 2 puis 4 heures dans l'eau bouillante, les angles mesurés sont respectivement de 60° et inférieur à 60° pour la première série, de 105 et 82° pour la série correspondant à l'invention et de 20° après deux heures dans l'eau bouillante pour la deuxième série.

Contrairement aux revêtements correspondant aux séries 1 et 2, le revêtement selon l'invention présente un angle de contact supérieur à 60° après 2 heures, voire 4 heures, dans l'eau bouillante.

Par ailleurs, des échantillons correspondant aux séries 1 et 3 sont soumis à des tests d'abrasion.

Les angles de contact d'une goutte d'eau mesurés sur les échantillons sont les suivants :

|  | Taber tours | | |
|---|---|---|---|
| Série | 100 | 200 | 500 |
| 1 | 75 | 65 | < 60 |
| 3 | 90 | 81 | 76 |

En outre, le test de l'essuie-glace est effectué sur la série 1. Après 15.000 cycles, l'angle de contact d'une goutte d'eau est inférieur à 60°, un cycle correspondant à un mouvement d'aller et retour du balai.

Cet exemple illustre la résistance améliorée de la sous-couche selon l'invention, l'angle de contact étant supérieur à 60° après un test d'abrasion ou de résistance chimique.

## EXEMPLE 2

Trois séries de plaques sont préparées comme à l'exemple précédent, exceptée la nature des sous-couches.

La quatrième série d'échantillons comporte une sous-couche de $SnO_2$ dopée au fluor déposée par pyrolyse liquide. Le précurseur est le dibutyloxyde d'étain et l'acétate d'ammonium dans un solvant organique comme décrit dans le brevet FR 1 036 647.

La cinquième série d'échantillons comprend des plaques ayant une sous-couche de $SnO_2$ obtenue par pyrolyse liquide.

La sixième série comprend des plaques ayant deux sous-couches. La première sous-couche est de $SiO_pC_q$ (avec $1<p<2$ et $0<q<1$) déposée par CVD plasma, et une sous-couche $SnO_2$ dopée au fluor déposée par pyrolyse, comme décrit dans la demande de brevet FR 93/01545. L'épaisseur de l'ensemble constitué par ces sous-couches est de 1000 à 4000 Angströms.

Les densités des sous-couches sont de l'ordre de 6,3 g/cm$^3$ pour les séries 4, 5 et 6. Celle-ci est à comparer à la densité de l'oxyde d'étain qui est de 6,9 g/cm$^3$. Autrement dit, la densité des sous-couches est de plus de 90 % de celle du matériau de référence.

Les duretés mesurées selon le test Airco sont respectivement 8,9 ; 9,1 et 8,6 pour les séries 4, 5 et 6. Elles sont supérieures à celle du verre qui est de 7,3.

La rugosité des plaques des séries 4, 5 et 6 est de 180, 240 et 300 Angströms. Cette rugosité est relativement importante. Elle est liée à la nature et au mode d'obtention de ces sous-couches.

Ces plaques sont ensuite nettoyées et revêtues de la même couche hydrophobe qu'à l'exemple 1. Les essais de résistance sont reportés dans le tableau suivant, donnant les angles de contact d'une goutte d'eau avant le test et après le test de résistance.

| Série | Initial | Test à l'eau bouillante | | | Taber tours | | |
|---|---|---|---|---|---|---|---|
| | | 2 h | 4 h | 8 h | 100 | 200 | 500 |
| 4 | 120° | 115 | 106 | 105 | 95 | 90 | 85 |
| 5 | 118 | 106 | 108 | 85 | 89 | 90 | 86 |
| 6 | 115 | 105 | 95 | 90 | 90 | 90 | 90 |

Le test de l'essuie-glace est effectué sur la série 4. Après 100.000 cycles, l'angle de contact d'une goutte d'eau est de 90° et de 80° après 160.000 cycles, un cycle correspondant à un aller et retour du balai.

Ces exemples montrent l'amélioration obtenue en utilisant une sous-couche selon l'invention.

**EXEMPLE 3**

Trois séries de plaques sont préparées comme à l'exemple 2, à l'exception de la nature des sous-couches.

Les séries 7,8 et 9 correspondent à des sous-couches à base $SiO_pC_q$, $TiO_2$ et $Ta_2O_5$.

Les sous-couches à base de $TiO_2$ et $Ta_2O_5$ sont obtenues par dépôt sous vide. Leur épaisseur est de quelques centaines d'Angströms. La sous-couche $SiO_pC_q$ (avec $1<p<2$ et $0<q<1$) est obtenue par Chemical Vapour Deposition.

Les densités mesurées sont respectivement 2,1 ; 3,6 et 7,4 pour les séries 7, 8 et 9. Les densités massiques des constituants correspondant sont 2,3 ; 3,8 (structure cristalline de type anatase) et 8,2. La densité des sous-couches est au moins égale à 90 % des matériaux qui les constituent.

La dureté de la série 8 est de 8,9 et sa rugosité est de 20 Angströms. Celles de la série 3, servant de base de comparaison, sont 8,4 et 20 Angströms.

Les sous-couches préalablement nettoyées sont revêtues d'une couche hydrophobe comme à l'exemple 1.

Les angles de contact d'une goutte d'eau sur les échantillons sont reportés dans le tableau suivant.

| Série | Initial | Test à l'eau bouillante | | Taber tours | | |
|---|---|---|---|---|---|---|
| | | 2 h | 4 h | 100 | 200 | 500 |
| 3 | 115 | 105 | 82 | 90 | 80 | 76 |
| 7 | 117 | 100 | 95 | 88 | 66 | 62 |
| 8 | 118 | 96 | 92 | | | |
| 9 | 110 | 79 | 77 | 92 | 88 | 86 |

Cet exemple illustre la bonne résistance chimique et mécanique et à l'abrasion des revêtements selon l'invention. Ce résultat est obtenu même avec une faible rugosité des sous-couches.

**EXEMPLE 4**

L'angle de contact d'une goutte de vaseline est mesuré sur des échantillons correspondant aux séries 4, 6 et 9. Les résultats sont les suivants :

EP 0 692 463 B1

| Série | Initial |
|-------|---------|
| 4 | 85° |
| 6 | 80° |
| 9 | 72° |

Cet exemple illustre les propriétés d'oléophobie des revêtements selon l'invention.

**EXEMPLE 5**

Deux échantillons, référencés 1 et 2, de verre flotté silico-sodo-calcique sont recouverts d'un empilement antireflet.
Cet empilement est un empilement quadricouches composé de la séquence suivante : verre/$Nb_2O_5$ (2)/$SiO_2$ (3)/$Nb_2O_5$ (4)/$SiO_2$ (5). Les dépôts successifs de couches minces se font par pulvérisation cathodique réactive assistée par champ magnétique.
Les deux couches de $Nb_2O_5$ d'indice de réfraction d'environ 2,3 sont obtenues par pulvérisation réactive en présence d'oxygène à partir de cibles de niobium ; les deux couches de $SiO_2$ d'indice de réfraction d'environ 1,47 sont obtenues par pulvérisation réactive en présence d'oxygène à partir de cibles de silicium dopé au bore ou à l'aluminium.
L'épaisseur géométrique en nanomètres de chacune des couches de l'empilement est donnée dans le tableau suivant :

|  | épaisseur (nm) |
|-------------|-------|
| $Nb_2O_5$ (2) | 12 |
| $SiO_2$ (3) | 38 |
| $Nb_2O_5$ (4) | 120 |
| $SiO_2$ (5) | 87 |

Sur l'un des échantillons, référencé 1, la couche $SiO_2$ (5), préalablement nettoyée, est recouverte d'une couche hydrophobe et oléophobe telle que décrite dans l'exemple 1. L'épaisseur de la couche hydrophobe et oléophobe est de 15 Angströms et son indice de réfraction égal à 1,3.
L'échantillon 2 est démuni de la couche hydrophobe.
Ces deux échantillons sont soumis au test de brouillard salin. On mesure la valeur de réflexion lumineuse $R_L$ en pourcentages, selon l'illuminant $D_{65}$, à incidence normale initiale et après 14 jours passés dans une atmosphère saline. Les résultats sont les suivants :

| Echantillon | $R_L$ initial | $R_L$ après 14 jours |
|-------------|---------------|----------------------|
| 1 | 0,5 | 1,0 |
| 2 | 0,5 | 10,7 |

Cet exemple illustre la durabilité améliorée d'un vitrage antireflet revêtu d'une couche hydrophobe et oléophobe.

**Revendications**

1.  Vitrage comprenant un substrat en verre recouvert, au moins sur une partie, directement, ou avec interposition d'une ou plusieurs couches fonctionnelles, d'un revêtement comprenant une sous-couche essentiellement minérale et une couche hydrophobe-oléophobe, caractérisé en ce que la densité de la sous-couche minérale est au moins égale à 80 % de la densité massique du matériau qui la constitue.

2. Vitrage selon la revendication 1, caractérisé en ce que la dureté de la sous-couche est supérieure à celle du verre.

3. Vitrage selon la revendication 1 dont la sous-couche présente une épaisseur comprise entre 80 et 5000 Angströms.

4. Vitrage selon l'une des revendications précédentes, caractérisé en ce que la sous-couche est constituée d'un des matériaux du groupe comprenant : $Al_2O_3$, $Ga_2O_3$, $SnO_2$, $TiO_2$, $Ta_2O_5$, $Cr_2O_3$, $ZrO_2$, $Nb_2O_5$, $In_2O_3$, $Fe_2O_3$, $CoO_3$, $V_2O_5$, $Y_2O_3$, TiN, $SiO_x$ avec x compris entre 0 et 2, $SiO_pC_q$ seuls ou en combinaison, avec p compris entre 1 et 2, et q compris entre 0 et 1.

5. Vitrage selon l'une des revendications précédentes, caractérisé en ce que la densité massique de la sous-couche est au moins 90 % de la densité du matériau qui la constitue.

6. Vitrage selon l'une des revendications précédentes, caractérisé en ce que la sous-couche est obtenue par pyrolyse.

7. Vitrage selon l'une des revendications 1 à 6, caractérisé en ce que la sous-couche est conductrice et permet d'évacuer les charges électrostatiques susceptibles de s'accumuler sur le vitrage.

8. Vitrage selon l'une des revendications précédentes, caractérisé en ce que la sous-couche est constituée de $SnO_2$ dopé au fluor.

9. Vitrage selon l'une des revendications précédentes, caractérisé en ce que la couche hydrophobe-oléophobe est obtenue au moyen d'au moins un alkylsilane fluoré hydrolysable ou d'un mélange d'alkylsilanes fluorés hydrolysables et, éventuellement, d'autres silanes.

10. Vitrage selon la revendication 9, caractérisé en ce que l'alkylsilane fluoré est un perfluoroalkylsilane de formule :

$$CF_3\text{-}(CF_2)_n\text{-}(CH_2)_m\text{-}SiX_3$$

dans laquelle n est 0 à 12, m est 2 à 5, X est un groupe hydrolysable.

11. Vitrage selon la revendication 9 ou la revendication 10, caractérisé en ce que la couche hydrophobe est une couche d'une épaisseur comprise entre 10 et 50 Angströms.

12. Vitrage selon la revendication 1, caractérisé en ce que l'angle de contact d'une goutte sur le revêtement ayant subi une abrasion de 500 tours de meule selon la norme ASTM D 1044-78 est supérieur à 60°.

13. Vitrage selon la revendication 1, caractérisé en ce que substrat en verre est directement recouvert d'un empilement fonctionnel dont la dernière couche la plus éloignée du substrat est une couche essentiellement minérale dont la densité est égale à au moins 80 % de celle du matériau qui la constitue, ladite dernière couche étant recouverte, au moins partiellement, par une couche hydrophobe et oléophobe.

14. Vitrage selon la revendication 13, caractérisé en ce que la couche hydrophobe et oléophobe est une couche selon les revendications 9 à 12.

15. Vitrage selon l'une des revendications 13 ou 14, caractérisé en ce que la dernière couche de l'empilement fonctionnel est une couche constituée essentiellement d'oxyde de silicium et, de préférence, de dioxyde de silicium.

16. Vitrage selon la revendication 15, caractérisé en ce que l'empilement fonctionnel est choisi parmi un empilement antireflet ou un empilement bas émissif et/ou conducteur.

17. Procédé de fabrication d'un vitrage selon l'une des revendications 1 à 16, caractérisé en ce qu'il comprend notamment les étapes suivantes :

- dépôt d'une couche hydrophobe et oléophobe sur une sous-couche essentiellement minérale de densité au moins égale à 80 % de la densité massique du matériau qui la constitue, après un nettoyage de cette sous-couche, par mise en contact du substrat revêtu de la sous-couche avec une solution contenant au moins un alkylsilane fluoré hydrolysable dans un système solvant non-polaire.

18. Procédé de fabrication d'un vitrage selon l'une des revendications 1 à 12, caractérisé en ce qu'il comprend notamment les étapes suivantes :

- nettoyage de la surface du substrat à enduire,
- dépôt d'une sous-couche essentiellement minérale, la densité de la sous-couche étant au moins égale à 80 % de la densité massique du matériau qui la constitue,
- nettoyage de la sous-couche à revêtir,
- dépôt d'une couche hydrophobe et oléophobe sur ladite sous-couche nettoyée.

## Claims

1. Glazing comprising a glass substrate covered, at least on one part, directly, or with the interposing of one or more functional layers, of a covering comprising an essentially mineral underlayer and a hydrophobic-oleophobic layer, characterized in that the density of the mineral sublayer is at least equal to 80% of the mass density of the material forming the same.

2. Glazing according to claim 1, characterized in that the underlayer is harder than the glass.

3. Glazing according to claim 1, whose underlayer has a thickness between 80 and 50000 Angströms.

4. Glazing according to one of the preceding claims, characterized in that the underlayer is constituted by one of the materials of the group comprising: $Al_2O_3$, $Ga_2O_3$, $SnO_2$, $TiO_2$, $Ta_2O_5$, $Cr_2O_3$, $ZrO_2$, $Nb_2O_5$, $In_2O_3$, $Fe_2O_3$, $CoO_3$, $V_2O_5$, $Y_2O_3$, TiN, $SiO_x$ with x between 0 and 2, $SiO_pC_q$ alone or in combination, with p between 1 and 2 and q between 0 and 1.

5. Glazing according to one of the preceding claims, characterized in that the mass density of the underlayer is at least 90% of the density of the material forming the same.

6. Glazing according to one of the preceding claims, characterized in that the underlayer is obtained by pyrolysis.

7. Glazing according to one of the claims 1 to 6, characterized in that the under layer is conductive and makes it possible to remove the electrostatic charges liable to accumulate on the glazing.

8. Glazing according to one of the preceding claims, characterized in that the underlayer is constituted by fluorine-doped $SnO_2$.

9. Glazing according to one of the preceding claims, characterized in that the hydrophobic-oleophobic layer is obtained by means of at least one hydrolyzable fluoroalkylsilane or a mixture of hydrolyzable fluoroalkylsilanes and optionally other silanes.

10. Glazing according to claim 9, characterized in that the fluoroalkylsilane is a perfluoroalkylsilane of formula

$$CF_3\text{-}(CF_2)_n\text{-}(CH_2)_m\text{-}SiX_3$$

in which n is 0 to 12, m is 2 to 5 and x is a hydrolyzable group.

11. Glazing according to claim 9 or 10, characterized in that the hydrophobic layer has a thickness between 10 and 50 Angströms.

12. Glazing according to claim 1, characterized in that the contact angle of a drop on the covering having undergone an abrasion of 500 wheel revolutions according to standard ASTM D 1044-78 exceeds 60°.

13. Glazing according to claim 1, characterized in that the glass substrate is directly covered by a functional stack, whereof the last layer furthest from the substrate is an essentially mineral layer, whose density is equal to at least 80% of that the mineral forming it, said last layer being covered, at least partly, by a hydrophobic and oleophobic layer.

14. Glazing according to claim 13, characterized in that the hydrophobic and oleophobic layer is a layer according to claims 9 to 12.

15. Glazing according to one of the claims 13 or 14, characterized in that the final layer of the functional stack is a layer essentially constituted by silicon oxide and preferably silicon dioxide.

16. Glazing according to claim 15, characterized in that the functional stack is chosen from among an anti-reflection stack or a low emissive and/or conductive stack.

17. Process for the production of a glazing according to one of the claims 1 to 16, characterized in that it particularly comprises the following stages:

- deposition of a hydrophobic and oleophobic layer on an essentially mineral underlayer with a density at least equal to 80% of the mass density of the material forming it, following a cleaning of said underlayer, by contacting the substrate covered with the underlayer with a solution containing at least one hydrolyzable fluoroalkylsilane in an apolar solvent system.

18. Process for the production of a glazing according to one of the claims 1 to 12, characterized in that it more particularly comprises the following stages:

- cleaning the surface of the substrate to be coated,
- deposition of an essentially mineral underlayer, the density of the underlayer being at least equal to 80% of the mass density of the material forming it,
- cleaning the underlayer to be coated,
- deposition of a hydrophobic and oleophobic layer on said cleaned underlayer.

## Patentansprüche

1. Verglasung, welche ein Glassubstrat umfaßt, das direkt oder unter Zwischenlegen einer oder mehrerer Funktionsschichten wenigstens teilweise mit einer Beschichtung überzogen ist, die eine im wesentlichen anorganische Grundschicht und eine hydrophob-oleophobe Schicht enthält, **dadurch gekennzeichnet, daß** die Dichte der anorganischen Grundschicht mindestens 80 % der Massendichte des Materials, welches sie bildet, beträgt.

2. Verglasung nach Anspruch 1, **dadurch gekennzeichnet, daß** die Härte der Grundschicht größer als die des Glases ist.

3. Verglasung nach Anspruch 1, in welcher die Dicke der Grundschicht 80 bis 5 000 Angström beträgt.

4. Verglasung nach einem der vorhergehenden Ansprüche, **dadurch gekennzeichnet, daß** die Grundschicht aus einem der Materialien der Gruppe besteht, die $Al_2O_3$, $Ga_2O_3$, $SnO_2$, $TiO_2$, $Ta_2O_5$, $Cr_2O_3$, $ZrO_2$, $Nb_2O_5$, $In_2O_3$, $Fe_2O_3$, $CoO_3$, $V_2O_5$, $Y_2O_3$, TiN, $SiO_x$, wobei x 0 bis 2 beträgt, und $SiO_pC_q$, wobei p 1 bis 2 und q 0 bis 1 beträgt, einzeln oder kombiniert umfaßt.

5. Verglasung nach einem der vorhergehenden Ansprüche, **dadurch gekennzeichnet, daß** die Massendichte der Grundschicht mindestens 90 % der Dichte des Materials, welches sie bildet, beträgt.

6. Verglasung nach einem der vorhergehenden Ansprüche, **dadurch gekennzeichnet, daß** die Grundschicht durch Pyrolyse erhalten worden ist.

7. Verglasung nach einem der Ansprüche 1 bis 6, **dadurch gekennzeichnet, daß** die Grundschicht leitfähig ist und es ermöglicht, die elektrostatischen Ladungen, welche sich auf der Verglasung ansammeln können, abzuleiten.

8. Verglasung nach einem der vorhergehenden Ansprüche, **dadurch gekennzeichnet, daß** die Grundschicht aus mit Fluor dotiertem $SnO_2$ gebildet wird.

9. Verglasung nach einem der vorhergehenden Ansprüche, **dadurch gekennzeichnet, daß** die hydrophob-oleophobe Schicht mittels mindestens eines hydrolysierbaren Fluoralkylsilans oder eines Gemischs aus hydrolysierbaren Fluoralkylsilanen und gegebenenfalls anderen Silanen erhalten wird.

10. Verglasung nach Anspruch 9, **dadurch gekennzeichnet, daß** das Fluoralkylsilan ein Perfluoralkylsilan mit der Formel

$$CF_3\text{-}(CF_2)_n\text{-}(CH_2)_m\text{-}SiX_3$$

ist, in welcher n 0 bis 12 und m 2 bis 5 ist und X eine hydrolysierbare Gruppe bedeutet.

11. Verglasung nach Anspruch 9 oder 10, **dadurch gekennzeichnet, daß** die Dicke der hydrophoben Schicht 10 bis 50 Angström beträgt.

12. Verglasung nach Anspruch 1, **dadurch gekennzeichnet, daß** der Kontaktwinkel eines Tropfens auf der Beschichtung, die gemäß der Norm ASTM D 1044-78 einem Abrieb mit 500 Umdrehungen der Schleifscheibe ausgesetzt worden ist, mehr als 60° beträgt.

13. Verglasung nach Anspruch 1, **dadurch gekennzeichnet, daß** das Glassubstrat direkt mit einem Funktionsaufbau beschichtet wird, dessen am weitesten vom Substrat entfernte letzte Schicht eine im wesentlichen anorganische Schicht ist, deren Dichte mindestens 80 % derjenigen des Materials beträgt, das sie bildet, wobei diese letzte Schicht wenigstens teilweise mit einer hydrophoben und oleophoben Schicht überzogen ist.

14. Verglasung nach Anspruch 13, **dadurch gekennzeichnet, daß** die hydrophobe und oleophobe Schicht eine Schicht gemäß den Ansprüchen 9 bis 12 ist.

15. Verglasung nach Anspruch 13 oder 14, **dadurch gekennzeichnet, daß** die letzte Schicht des Funktionsaufbaus eine Schicht ist, die im wesentlichen aus Siliciumoxid und vorzugsweise aus Siliciumdioxid besteht.

16. Verglasung nach Anspruch 15, **dadurch gekennzeichnet, daß** der Funktionsaufbau aus einem Antireflexaufbau oder einem niedrigemittierenden und/oder leitfähigen Aufbau ausgewählt ist.

17. Verfahren zur Herstellung einer Verglasung nach einem der Ansprüche 1 bis 16, **dadurch gekennzeichnet, daß** es insbesondere die Stufe

- nach Reinigung der Grundschicht Aufbringen einer hydrophoben und oleophoben Schicht auf dieser im wesentlichen anorganischen Grundschicht, deren Dichte mindestens 80 % der Massendichte des Materials beträgt, welches sie bildet, indem das mit der Grundschicht überzogene Substrat mit einer Lösung in Berührung gebracht wird, die mindestens ein hydrolysierbares Fluoralkylsilan in einem unpolaren Lösungsmittelsystem enthält,

umfaßt.

18. Verfahren zur Herstellung einer Verglasung nach einem der Ansprüche 1 bis 12, **dadurch gekennzeichnet, daß** es insbesondere folgende Stufen

- Reinigung der Oberfläche des zu beschichtenden Substrats,

- Aufbringen einer im wesentlichen anorganischen Grundschicht, deren Dichte mindestens 80 % der Massendichte des Materials, welches sie bildet, beträgt,

- Reinigung der zu beschichtenden Grundschicht und

- Aufbringen einer hydrophoben und oleophoben Schicht auf dieser gereinigten Grundschicht

umfaßt.